# EUROPEAN PATENT SPECIFICATION

(11) **EP 4 251 539 B1**
(45) Date of publication and mention of the grant of the patent: **21.08.2024**
(21) Application number: 21816447.3
(22) Date of filing: 24.11.2021
(51) Int. Cl.: B65D 85/804

(54) **CAPSULE AND MANUFACTURING PROCESS FOR SAID CAPSULE**
KAPSEL UND HERSTELLUNGSVERFAHREN VON DIESER KAPSEL
CAPSULE ET MÉTHODE DE FABRICATION DE CETTE CAPSULE

(30) Priority: 27.11.2020 EP 20210284
(43) Date of publication of application: 04.10.2023
(73) Proprietor: Société des Produits Nestlé S.A., 1800 Vevey (CH)
(72) Inventor: RICHARD, Cedric, 1041 Poliez-Pittet (CH); GERBAULET, Arnaud, 25160 Oye et Pallet (FR); BEHRMANN, Veith, 1844 Villeneuve (CH)
(74) Representative: Rosolen-Delarue, Katell
(86) International application number: PCT/EP2021/082805
(87) International publication number: WO 2022/112320

(56) References cited:
- EP-A1- 2 487 122
- WO-A1-03/073896
- WO-A1-2012/100975
- WO-A1-2017/163210
- CN-U- 201 686 213
- DE-A1- 102013 215 274

## Description

### Field of the Invention

The invention relates to a capsule integrating a filter element for preparing a beverage, preferably a crema-free coffee, tea, milk or chocolate-based beverage.

The capsule comprises a substantially rigid capsule body having a circumferential sidewall extending around an inner space of the capsule which is at least partially filled with a beverage ingredient for preparing the beverage such as coffee, a base wall covering the inner space at a first end of the sidewall and a lid covering the inner space at a second end of the sidewall opposite the base wall. The capsule integrates in its inner space a filter and an aluminum disk comprising openings and the lid is removably attached to the capsule.

The invention also relates to a process for producing said capsule.

### Background of the invention

Capsules for preparing a beverage in a beverage preparation device, and presenting said features are generally known from the prior art. The beverage preparation device comprises a brewing chamber in which the capsule is positioned. Liquid from the beverage preparation device is injected in the capsule to extract the beverage from an extractable ingredient, usually roasted and ground coffee or tea, or to prepare the beverage from a soluble ingredient, usually instant coffee, instant tea or instant milk or chocolate-based product, contained within an inner space of the capsule.

In most of the capsules currently on the market, the inner space of the capsule is closed, hermetically or fluid-tightly closed from the environment prior to be use in the beverage preparation device in order to maintain or prolong a freshness of the beverage ingredient during storage.

The capsule hereto often comprises a substantially rigid capsule body having a circumferential sidewall extending around the inner space and a base wall covering the inner space at a first end of the sidewall. At a second end of the sidewall opposite the base wall the capsule body has an open filling side. A fluid and gas tight lid, for example an aluminum lid, is provided over the open filling side of the capsule body to cover the inner space. In use the capsule may be pierced, preferably at the base wall and/or the lid, to form an injection opening for injecting the liquid such as hot water, and/or to form an outlet opening which allows the prepared beverage to escape the capsule.

The known capsules are more particularly conceived for preparing an espresso type beverage using beverage preparation device delivering high pressurized hot water wherein the injection of pressurized hot water in the capsule leads to an extraction of substances from the coffee beverage ingredient and with foam forming on the beverage corresponding to an espresso beverage with a crema layer as obtained with known piston type espresso machine using high pressure brewing.

For a crema-free coffee beverage, for example a coffee beverage without foam, also referred to as filter coffee, usually specific apparatuses are used in which the beverage is prepared by unpressurized filtration of a mixture of beverage ingredient and water.

Some capsules to be used in pressurized beverage devices have been proposed for the preparation of crema free coffee.

EP 2952125 A1 discloses a capsule for preparing a beverage using an extractable product contained in an inner space of the capsule. The capsule comprises a circumferential first wall, a second wall closing the circumferential first wall at a first end, and a flexible sheet-shaped perforate and/or porous third wall closing the circumferential first wall at a second, open end opposite the second wall, thereby forming the said inner space. The third wall forms an outermost boundary of the capsule in an axial direction thereof and comprises a woven or nonwoven filtering material, such as filtering paper.

WO 2019/013623 A1 proposes a capsule comprising a rigid capsule body with a circumferential wall and a base wall that border an inner space filed with a beverage ingredient. An open filling side of the capsule at an end of the circumferential wall opposite the base wall is covered with a lid of fluid tight material. The lid is provided with a preformed outlet opening suitable for draining the prepared beverage from the inner space when the capsule is used in a beverage preparation device. The outlet opening is fluid tightly closed by a removable cover element extending over at least part of the lid.

Further capsules are known from EP 2 487 122 A1, WO 2017/163210 A1, WO 03/073896 A1 and CN 201 686 213 U.

However, these solutions are not fully satisfactory in what concerns the construction of the capsule, the ergonomic use of it by the consumer and the in-cup result.

It is therefore an object of the proposed invention to provide a capsule of simple construction and corresponding manufacturing method for producing a filter type coffee beverage with no crema which has all the characteristics of a filter coffee made with drip coffee machine and comply with expected sensory in-cup results expected by the consumer.

### Summary of the Invention

In this respect, the invention provides a capsule for providing a crema-free coffee, tea, milk or chocolate-based beverage according to Claim 1 and as described herein.

The claimed capsule is intended for preparing a beverage and comprises:
- a substantially rigid capsule body having a circumferential sidewall extending around an inner space of the capsule, said inner space being at least partially filled with a beverage ingredient suitable for preparing the beverage,
- a rigid base wall integral with the capsule body, the base wall covering the inner space at a first end of the sidewall,
- a flange arranged circumferentially around an open side of the capsule at a second end of the sidewall of the base body opposite the base wall,
- a lid covering the inner space and the open side of the capsule at the second end of the sidewall opposite the base wall and tightly closing the capsule, the lid being removably attached to the flange of the capsule,
- a filter element positioned in the inner space of the capsule between the beverage ingredient and the lid; and
- a carrier disk provided in the inner space of the capsule between the lid and the filter, said carrier disk comprising multiple preformed outlet openings suitable for draining the prepared beverage from the inner space outside of the capsule when the capsule is used in a beverage preparation device

According to the invention, the capsule comprises at least one mechanical deformation at the junction or in the vicinity of the junction of the flange and side wall of the capsule, said mechanical deformation retaining the carrier disk inside the inner space of the capsule.

In the example of a capsule comprising roast and ground coffee as a beverage ingredient, the specific structure of the capsule allows when the capsule is extracted in a beverage preparation after removal of the lid to get a coffee with limited formation of foam and cream.

This freshly brewed coffee has the main characteristics of a filter-like coffee with little crema, quickly disappearing to leave only a crown of crema around the cup. The result-in-cup is a coffee having a low body, little acidity, and little bitterness with absence of harsh, while being aromatic, soft, smooth and sweet.

Thanks to its specific construction, the carrier disk, and at the same time the filter, are retained in the capsule when the lid is removed for extraction of the capsule. As well, during and after extraction of the capsule (once lid has been removed) in the beverage preparation machine, the capsule's integrity is kept, and no coffee (wet coffee) powder is escaping the capsule.

Thanks to the proposed invention, in the claimed capsule, the carrier disk is positioned inside the capsule and kept at distance from the lid comprised, i.e., between 0.1 mm and 2 mm. This allows avoiding possible interaction between the carrier disk and the tearing surface of the extraction plate of the beverage preparation device when the coffee bed volume expands during extraction.

Indeed, the capsule should sustain an extraction of the beverage ingredient is an extraction process made at a pressure below 8 bar, more preferably below 5 bar.

In the proposed capsule structure, the filter element comprises a layer of non-woven material adapted to prevent coffee drain to go through and reducing the formation of a crema layer.

In the current envisaged solution, the filter is positioned on the carrier disk. This allows an easy processing in the assembling process of the capsule. Additionally, the filter may be fixed onto the carrier disk.

The lid of the capsule comprises a free pull tab protruding from the lid. The pull tab is integral with the lid allowing to remove the full lid. This handling and opening are then easier.

In a proposed embodiment, the lid comprises at least an aluminum layer to ensure a better shelf life of the coffee in the capsule.

In addition, the lid may further comprise a plastic layer and/or a heat seal layer to ensure food grade compatibility for sealing the lid onto the flange of the capsule.

Preferably, the carrier disk is made of Aluminum allowing easy recycling in the conventional aluminum stream when the capsule is done in aluminum.

As a preference, the capsule body, the lid, and the carrier disk are each mainly made from aluminum. The use of aluminum ensures a better coffee protection and a longer shelf life. Additionally, the end of life of the capsule is easier and recycling is easier.

In an alternative way, the capsule body, the lid and the carrier disk may each be made of plastic or of a laminated or multilayer plastic element.

The proposed capsule comprises a beverage ingredient. The beverage ingredient is preferably ground coffee, preferably in an amount of at least 4 g, preferably between 4.5 g and 15 g.

In a proposed embodiment of the invention, the at least one mechanical deformation is provided on the side of the open side of the capsule, opposite the base wall at the junction or in the vicinity of the junction of the flange and side wall of the capsule.

In another proposed embodiment of the invention, the at least one mechanical deformation is provided on the side of the capsule opposite the open side of the capsule at the junction or in the vicinity of the junction of the flange and side wall of the capsule.

According to the invention, the at least one mechanical deformation at the junction of the flange and side wall of the capsule is a deformation by crimping. This crimping deformation by reducing the diameter (of the capsule's opening on its open side) allows holding the carrier disk inside the capsule by deforming the capsule (made of a ductile material).

In order to provide sufficient and efficient retention of the carrier disk inside the capsule, the number of mechanical deformations, also called crimping points, is between 2 and 10.

The mechanical deformations are angularly distributed at the junction of the flange and side wall of the capsule and preferably the mechanical deformations are equally distributed at the junction of the flange and side wall of the capsule.

The mechanical deformations have rounded crimping imprints (or shape) to avoid creation of holes into the aluminum layer of the capsule.

The invention further provides a method of manufacturing a capsule suitable for preparing a beverage as claimed.

The proposed method of manufacturing comprises the following steps:
- providing a substantially rigid capsule body having a circumferential sidewall extending around an inner space to be at least partially filled with a beverage ingredient suitable for preparing the beverage, a rigid base wall integral with the capsule body, the base wall covering the inner space at a first end of the circumferential wall and a flange arranged circumferentially around an open side of the capsule at a second end of the sidewall of the base body opposite the base wall,
- filling the inner space with an amount of the beverage ingredient through the open side of the capsule body opposite the base wall,
- inserting through the open side of the capsule body a filter in the inner space after filling of the inner space with the beverage ingredient
- inserting through the open side of the capsule body a carrier disk over the filter in the inner space, optionally the filter and carrier disk being inserted in the inner space of the capsule at the same time, the carrier disk comprising multiple outlet openings through which in use a prepared beverage may flow out of the capsule,
- closing the open side of the capsule by attaching a lid comprising a pull tab to a flange of the capsule flange extending over the open side, the lid closing tightly the capsule;

According to the invention, the manufacturing method further comprises a step of mechanically deforming the capsule at the junction or in the vicinity of the junction of the flange and side wall of the capsule, said mechanical deformation retaining the carrier disk inside the inner space the capsule.

The proposed manufacturing process can easily be implemented in a conventional capsule production line, without significant changes else than inserting new machines or modules for inserting filter and carrier disk and crimping the capsule.

The step of mechanically deforming the capsule at the junction of the flange and side wall is performed before the step of closing the open side of the capsule with a lid. With this process there is no risk of piercing the lid during crimping and once the lid is assembled, the tightness of the product is fully kept.

In an alternative embodiment, the step of mechanically deforming the capsule at the junction of the flange and side wall is performed after the step of closing the open side of the capsule with a lid.

The step of mechanically deforming the capsule at the junction of the flange and side wall is performed on the side of the open side of the capsule, opposite the base wall.

In an alternative embodiment, the step of mechanically deforming the capsule at the junction of the flange and side wall is performed on the side of the capsule opposite the open side of the capsule.

The step of mechanically deforming the capsule at the junction of the flange and side wall is performed using a crimping method. The advantage of this method it that the sidewalls will be deformed without any creation of openings/pierced areas.
the step of mechanically deforming the capsule at the junction of the flange and side wall is performed using at least one crimping pin.

The at least on crimping pin has a rounded end shape to avoid piercing the sidewalls of the capsule

According to the invention, during the step of mechanically deforming the capsule at the junction of the flange and side wall of the capsule, the capsule is deformed in at least 2points, preferably in 3 to 10 points. The solution of having 8 crimping points was tested and validated as a balance between a really good fixation of the disc and crimping tool that can be easily manufactured.

The mechanical deformations are angularly distributed, preferably equally distributed, at the junction of the flange and side wall of the capsule. It is advantageous to cover the full disc surface equally to split the retaining force equally. This provides the best fixing effect of the disc inside the capsule.

Specific embodiments of the invention are described in the following detailed description. The objects are achieved by the present invention, i.e. a capsule, a system and a capsule manufacturing method.

### Brief description of the Drawings

The invention is further described with reference to the following examples and drawings, which form part of the present invention. The drawings are not in any way meant to reflect a limitation of the scope of the invention, unless this is clearly and explicitly indicated. It will be appreciated that the invention as claimed is not intended to be limited in any way by these exemplary embodiments and illustrations.

It is noted that the figures are only schematic representations of embodiments of the invention that are given by way of non-limiting example.

Embodiments of the present invention will now be described, by way of examples, with reference to the accompanying figures in which:
- Figure 1a is a perspective side view of a capsule tightly closed before use in a beverage preparation device, according to the invention;
- Figure 1b is a perspective side view of a capsule in which the lid is partially removed, according to the invention;
- Figure 1c is a perspective side view of a capsule in which the lid has been removed and ready to be used in a beverage preparation device, according to the invention;
- Figure 2a is a schematic cross-sectional view of a capsule according to a first embodiment of the invention;
- Figure 2b is an enlarged view of an identified bottom portion of the capsule of figure 2a;
- Figure 2c is a view of the carrier disk of the capsule of figure 2a before being assembled in the capsule;
- Figure 3a is a schematic cross-sectional view of a capsule according to a second embodiment of the invention;
- Figure 3b is an enlarged view of an identified bottom portion of the capsule of figure 3a;
- Figure 4a is a schematic view of the carrier disk of the capsule of figure 2a once assembled in the capsule with 4 crimping points according to the first proposed embodiment;
- Figure 4b is a schematic view of the carrier disk of the capsule of figure 2a once assembled in the capsule with 8 crimping points according to the first proposed embodiment;
- Figure 5a and 5b are schematic view of a proposed process for assembling carrier disk in a capsule according to the first and second proposed embodiments;
- Figure 6a is an enlarged view of an identified bottom portion of a capsule according to a third embodiment of the invention;
- Figure 6b is a schematic view of a proposed process for assembling carrier disk in a capsule according to a third proposed embodiment;
- Figure 7 is a schematic view of a proposed process for assembling carrier disk in a capsule according to an additional proposed embodiment.

### Detailed description

As used in this specification, the words "comprise", "comprising", and similar words, are not to be interpreted in an exclusive or exhaustive sense. In other words, they are intended to mean including, but not limited to.

Any reference to prior art documents in this specification is not to be considered as an admission that such prior art is widely known or forms part of the common general knowledge in the field.

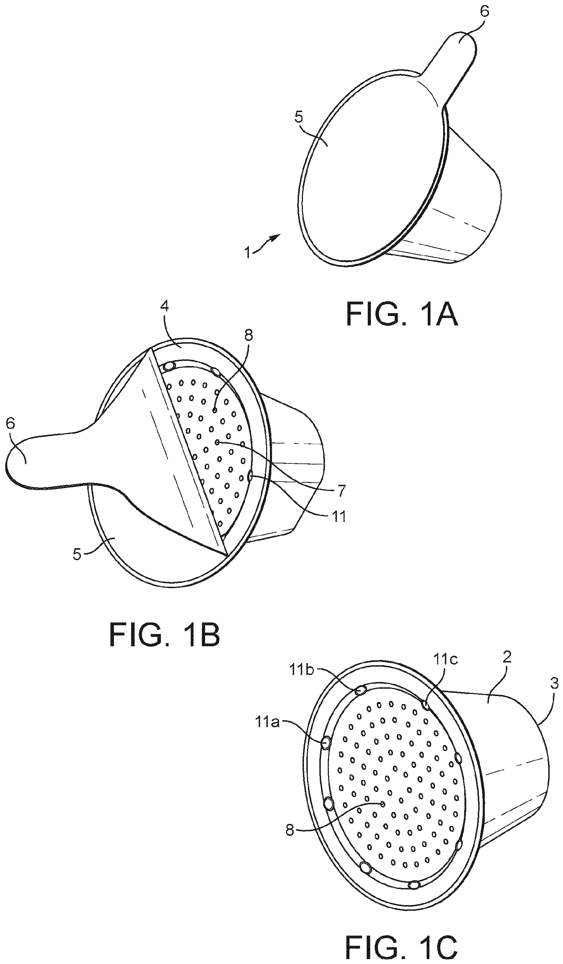

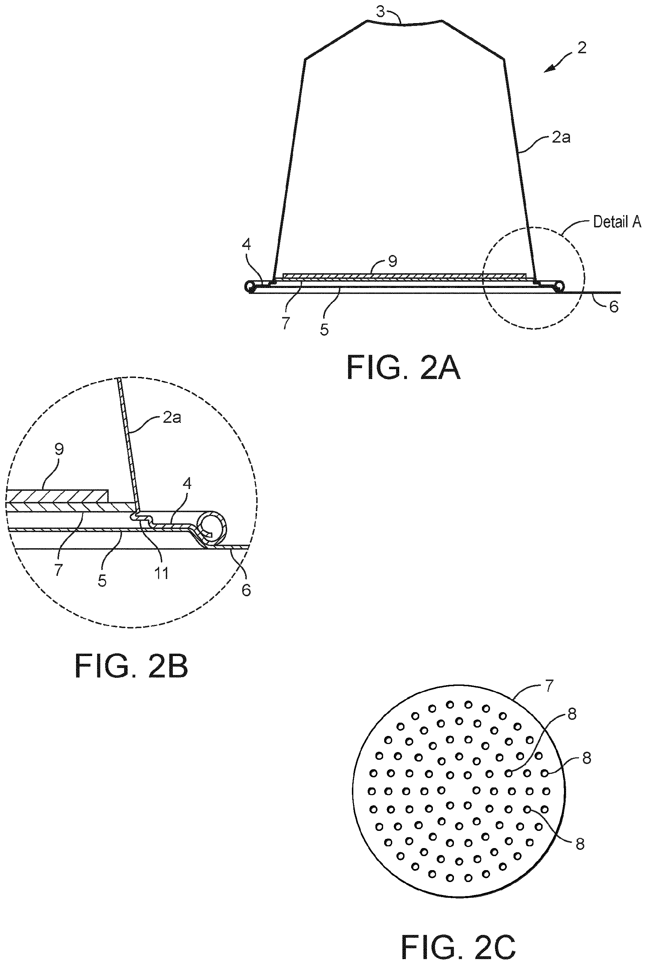

**Figure 1a** shows a capsule 1 according to the invention before use in a beverage preparation device, defined as storage state. Using the reference of figure 2, the capsule 1 of figure 1a, comprises a rigid capsule body 2. The body 2 comprises a frusto-conical sidewall 2a extending circumferentially around an inner space of the body. The capsule further comprises a base wall 3 integral with the capsule body 2 closing off the inner space at a first end of the side wall of the capsule body 2. A flange 4 extends radially outwardly from a second end of the side wall of the capsule body 2a. At the second end of the side wall the capsule body 2 has an open filling side.

As usual, the capsule body 2 is processed to be food grade and in most of the cases comprises a lacquer layer or a polymer film layer (identified as 2b in figure 9b) applied on the inside of the capsule body.

The capsule further includes a lid 5 that is attached to the flange 4 of the capsule body thereby closing hermetically the capsule. The lid 5 may be manually removed from the capsule by pulling on a pull tab 6. In the present case, the pull tab 6 is integral with the lid 5 but alternative solutions are available.

The lid 5 is a flexible sheet-like foil made of aluminum with an optional lacquer layer or a polymer layer on the sealing side.

In case the lid 5 comprises a lacquer layer on its sealing side, the thickness of the lacquer layer may be from 0.003 mm to 0.03mm. In case the lid 5 comprises a polymer layer on the sealing side, the thickness of the polymer layer may be from 0.01 mm to 0.05 mm.

The lid 5 which is intended to be removed using the pull tab is attached to the flange 4 using an adhesive layer. The adhesive material is applied in the form of a layer of adhesive material and may be, for example, a layer of heat-seal lacquer or a polymer film layer.

As an example, the sealing layer forming the adhesive material may be a layer between 0.003 mm and 0.03 mm.

The layer of adhesive material allows removal of the lid 5 to the flange 4 of the capsule without any damage to the capsule 1.

The inner space of the capsule is filled with a beverage ingredient before the capsule is closed. In the present case, the capsule is filled with a coffee bed of roast and ground coffee before the capsule is tightly closed with the lid 5 to maintain freshness of the roast and ground coffee. The weight of the coffee is in the range of 4 g to 15 g depending on the size of the capsule. However, tea, milk or chocolate ingredients may be envisaged.

The capsule of **figure 1b** shows the capsule of figure 1a in which the lid 5 is partially removed by tearing the pull tab 6 and in figure 1c the same capsule in which the lid 5 is fully removed. As can be seen, the second end of the capsule (filling side) is no longer closed and presents on the inside of the capsule a membrane, defined as a carrier disk 7. The carrier disk 7 comprises multiple preformed outlet openings 8 for the beverage (here coffee) prepared in the beverage preparation device. The capsule also comprises mechanical deformations 11a,11b, 11c ..., performed at the junction between the sidewall 2a and the flange 4 that retain the carrier disk 7 inside the inner space of the capsule. Four mechanical deformations 11 are visible in figure 1b. These mechanical deformations 11a, 11b, 11c ... are also visible on the capsule of **figure 1c**, indeed eight mechanical deformations can be observed. Their function and the way they are done will be explained in connection with figure 2a and followings.

The preformed outlet openings 8 of the carrier disk 7 are covered by the lid 5 of the capsule thereby closing the capsule to keep hermetic sealing of the inner space of the capsule for ensuring freshness of the beverage ingredient inside the capsule during storage.

As will be seen in the cross-sectional views of the various embodiment of the capsule of the invention (see for example figure 2a), the capsule further comprises in its inner space a filter element 9 positioned between the coffee bed and the carrier disk 7. The filter element 9 prevent solid particles of the beverage ingredient, for example coffee particles or tea leaves, to flow out of the capsule inside the end-consumer cup during extraction.

In the proposed invention, the capsule body 2 and the lid 5 are each mainly made from aluminum.

However, other material may be envisaged for the capsule body and the lid.

For example, the capsule body and the lid may be made of plastic polymer material, or the capsule body and the lid may be made of paper-based material.

As is understood, the capsule of the invention is extracted using a conventional highpressure beverage preparation device compatible with conventional Nespresso^{®} coffee capsules. The beverage preparation device comprises a fluid dispensing device capable of feeding an amount of a fluid, such as water, with a pressure between 0.1 bar and 20 bar to the capsule, and a brewing chamber, comprising a first part for holding the capsule and a second part for closing the brew chamber, the second part of the brewing chamber comprising an extraction plate presenting a tearing surface for engaging with the capsule at its second end opposite its base wall.

Summarizing a conventional extraction process of a closed capsule in the beverage preparation device: the capsule is inserted in the brewing chamber of the beverage preparation device. The fluid dispensing device feeds an amount of a fluid, such as water, to the capsule trough the base wall 3 inside the capsule to make the coffee infused and then extracted. As pressure increases inside the capsule, the lid of the capsule comes into contact with the tearing surface of the extraction plate and the lid is altered by said tearing surface leading to the formation of opening which allows the coffee to flow out of the capsule.

The formation of the outlet openings at the surface of the lid by interaction of the lid with the tearing surface for the flow out of the coffee participates to the formation of foam and cream in the preparation process.

The use of conventional capsule (closed capsule) with the above-mentioned process leads ta coffee extraction at a pressure between 8 bar and 20 bar.

In the extraction process of a capsule of the invention, the lid of the capsule is removed before insertion of the capsule inside the brewing chamber of the beverage preparation device. The fluid dispensing device feeds an amount of a fluid, such as water, to the capsule through the base wall 3 inside the capsule to make the coffee infused and then extracted. The extracted coffee goes through the filter element 9 and then flows out through the outlet openings of the carrier disk 7. During extraction, the carrier disk 7 (which is at a distance from the flange of the capsule) does not come into contact with the tearing surface of the extraction plate of the beverage preparation device so that the carrier disk 7 is not altered by the tearing during extraction of the capsule.

The use of a capsule of the invention (in a conventional beverage preparation device) leads to a coffee extraction at a pressure between 0.1 bar and 8 bar, depending on the quantity of coffee inside the capsule and on the filter element structure.

Due to the fact that the lid is removed from the capsule before its use in the beverage preparation device and as the carrier disk is located inside the capsule (see figure 2a for example), there is no interaction between the carrier disk 7 and the tearing surface of the extraction plate.

In more details, when preparing a coffee using a capsule 1 of the invention in a beverage preparation device, the user removes the lid 5 by tearing on the pull tab 6 before inserting the capsule in a beverage preparation machine. The base wall 3 of the capsule body 2 is further pierced and opened by piercing means of a beverage preparation device for supplying water under pressure into the capsule for the preparation of a coffee beverage.

Due to the fact that the capsule is not closed (lid 5 removed and outlet openings accessible) when used in the beverage preparation device, the extraction pressure building up inside the capsule is limited (0.1 to 6 bar) and there is limited formation of foam and cream during extraction.

Hence, because the pressure built up and the sudden pressure drop are not occurring (as with the use of conventional capsule) at the interaction between the coffee/the lid / the opening element(s) with the tearing surface of the extraction plate of the beverage preparation device, the resulting coffee in cup is with little or no crema.

The capsule of the invention allows preparing crema-free coffee, tea, milk or chocolate depending on the beverage ingredient inside the capsule.

**Figure 2a** shows a first embodiment of the capsule of the invention. As disclosed, the capsule comprises inside the inner space a carrier disk 7 comprising multiple preformed outlet openings 8.

As presented on **figure 2b**, which is an enlarged and cross-sectional view of the identified bottom part portion of figure 2a, the carrier disk 7 is positioned inside the capsule at a distance from the lid 5 comprised between 0.1 mm to 2mm, the lid 5 being sealed on the flange 4.

This gap between the capsule lid 5 (and so the flange 4 once the lid is removed for extraction) and the carrier disk 7 provides a recess for the tearing surface of the extraction plate of the beverage preparation device to protrude inside the capsule without contacting the carrier disk 7 and hence the coffee in the capsule.

The carrier disk 7 is a substantially round piece of material as shown in **figure 2c**, and its diameter is approximately the inner diameter of capsule at the location where the carrier disk 7 is positioned/ inserted / maintained depending on the assembling process.

Hence, in the proposed embodiment, the diameter of the carrier disk 7 is around 29.5 and 30.5 mm.

In the proposed embodiment, the carrier disk is made of Aluminum. Its thickness is about 0.3 mm but may vary between 0.1 mm and 1mm.

In the presented solution, the carrier disk 7 is maintained inside the capsule thanks to local mechanical deformations 11 made on the capsule at the junction between the side wall 2a and the flange 4 of the capsule 1. In the detailed cross section of figure 2b, one mechanical deformation 11 is visible. The mechanical deformation is in the form of a crimping point 11 and is located on the side of the open side of the capsule, opposite the base wall 3.

As the capsule is made of a ductile material, preferably aluminum, the mechanical deformation by crimping allows reducing the diameter and thereby holding the carrier disk 7 (and filter) inside the capsule. The carrier disk is the retained inside the capsule 1.

Here, during the manufacturing process, the step of mechanically deforming the capsule at the junction of the flange 4 and sidewall 2a leading to the crimping points 11 is made on the capsule before closing the capsule with the lid 5.

The crimping points 11 (also visible on figure 1c), which are between 2 and 10 crimping points are angularly distributed on the perimeter of the open side of the capsule at the junction of the flange and sidewall of the capsule.

In view of the tooling that is used to make the crimping points, the crimping points 11 will preferably be equally distributed on the perimeter of the open side of the capsule.

Additionally, the crimping points 11 may have rounded crimping imprints according to the used crimping tool.

In an alternative way, the carrier disk 7 may be made of plastic or of a laminated membrane comprising for example, in polyolefins such as polypropylene, polyethylene or any other semi crystalline polymer. The carrier disk 7 may also be made of paper-based material, like a coated paper, a laminated paper or molded paper.

As can be seen on the figure 2c, the preformed outlet openings 9 are circular openings homogeneously distributed on the surface of the carrier disk. This homogeneous distribution of the outlet openings with ensure a homogeneous flux of the coffee flowing out of the capsule 1. This also helps to avoid creation of channel with the beverage (coffee bed) inside the capsule.

The openings have a diameter set around 0.75 mm to 1 mm, but the diameter may vary between 0.4 mm and 3 mm, most preferably between 0.5 mm and 1.3 mm.

The number of preformed outlet openings may vary depending on the size of the capsule and on how fast the delivery of coffee is wished. In the disclosed embodiment, the carrier disk 7 comprises between 50 to 150 openings, preferably around 90 and in the presented embodiment 92.

In an alternative embodiment, the preformed outlet openings may be of oblong shape.

As presented, the capsule further comprises a filter element 9 that during a possible assembling process is positioned on the ingredient bed (coffee bed for example) after the filling of the capsule, and the carrier disk 7 is positioned between the filter element and the lid 5.

When the capsule is turned up-side down and as presented in the enlarged view of figure 2b, the filter element 9 lies on the carrier disk 7. The filter element is then supported by the carrier disk 7 inside the capsule. The filter is maintained flat inside the capsule and is not contacted by the tearing surface of the extraction plate of the beverage preparation device during extraction.

The use of a two-piece design may enable the use of none-sealable filter materials which could be an advantage for sustainability.

As proposed in this embodiment, the filter element 9 is circular (disk-shaped) with a smaller diameter than the diameter of the carrier disk 7, i.e. between28 mm and 30.5 mm, and in general with 0.1mmn less than the disk carrier.

However, in an alternative embodiment, the diameter of the filter element 9 could be similar to the one of the carrier disk 7.

The filter element 9 is made of non-woven material adapted to prevent / refrain coffee drains to go through too slowly or too quickly during extraction of the beverage with the aim to avoid creation of a crema layer and with the aim to avoid coffee drain going directly through the disk carrier to the cup.

The filter is preferably made of a compostable and/or biodegradable material and may be made of cellulose-based material with the below technical features. It may for example be a paper-based filter element.

The filter element 9 of the proposed embodiment comprises a thickness between 20 to 300 microns, an air permeability in the range of 100 to 5000 l/m2/s according to ISO 9237, and a weight in the range of 5 to 600 g/m2. It may for example be a paper-based filter element.

The filter elements may comprise a layer of non-woven material connected by any known means to another filtering layer.

In the proposed embodiment of figures 2a to 2c, the filter element 9 and carrier disk 7 are independent elements positioned on one another. However, they may be assembled together, for example by gluing. This will then change the assembling process in the capsule as the insertion of the filter and carrier disk will be made in one step.

The proposed circular carrier disk 7 may have a tapered shape on its perimeter so as to fit (force fit) into capsules having truncated cone shape. However, other alternative shape and arrangement of the carrier disk inside the capsule may be envisaged.

It is important that the carrier disk 7 and filter element 9 remains in place inside the capsule when the lid 5 is removed and the capsule 1 extracted in the beverage preparation machine. Several assembling process may be considered and will be later on disclosed in connection with the proposed embodiments of the capsule according to the invention.

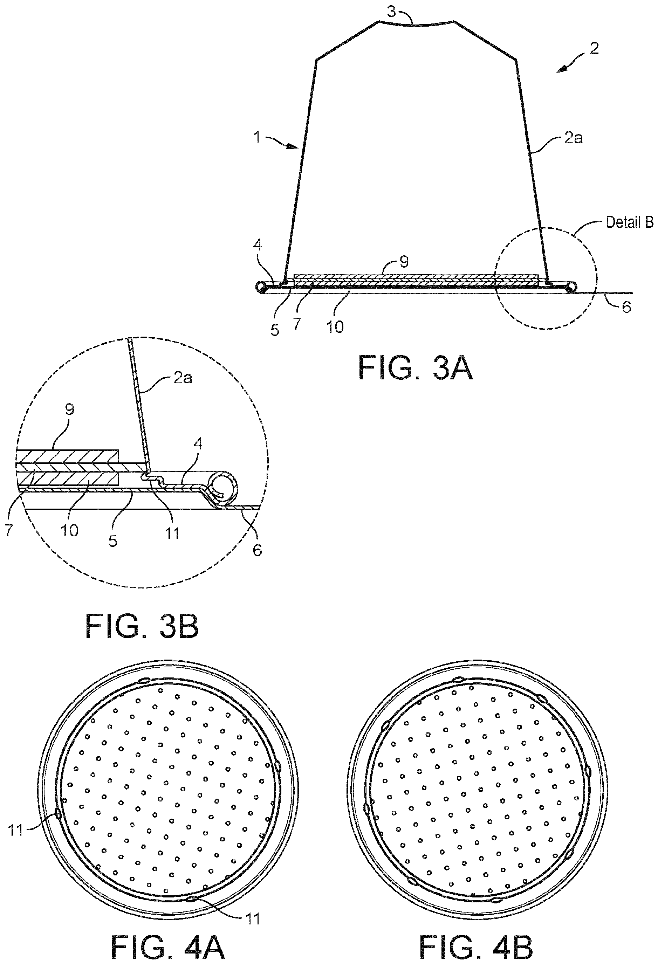

In a further developed solution of the first embodiment of the invention presented in **figure 3a and 3b** (detail of figure 3a), a second filter, made for example of non-woven material is added inside the capsule. The second filter element is positioned onto and may be fixed to the carrier disk on the side facing the lid (coffee opposing side - facing directly the pyramid plate of the beverage preparation device) without contacting the lid.

The purpose of this second filter 10 is to allow transversal flow of coffee in case the perforations match the flat top surface of the truncated pyramids.

As mentioned, the second filter element is made of non-woven material, however, it can be made of any suitable element compatible with the required function.

The second filter element may have the following dimensions from 28 mm to 30.5 mm.

In the proposed embodiment the second filter element is substantially circular with a diameter slightly smaller than the carrier disk 7.

The assembling process and configuration proposed in connection with figure 2a to 2c may still apply to this further developed solution.

**Figure 4a and 4b** are representing the capsule of figure 2a (view from the open side of the capsule) with a carrier disk 7 inserted into the capsule of figure 2a once assembled in the capsule with, respectively, 4 and 8 crimping points before closing the open side of the capsule by attaching a lid.

The number of crimping points (mechanical deformation) may vary between 2 and 10 to allow sufficient and efficient retention of the carrier disk 7 (and filter element 9 supported by the carrier disk) inside the capsule 1.

The crimping points 11 are angularly distributed around the open side perimeter of the capsule at the junction between the sidewall 2a and the flange 4 of the capsule. Preferably as here presented the crimping points are equally distributed along the perimeter of the open side of the capsule.

The currently used tooling during the step of mechanically deforming the capsule has a round end shape allowing to have crimping points with substantially rounded crimping imprints.

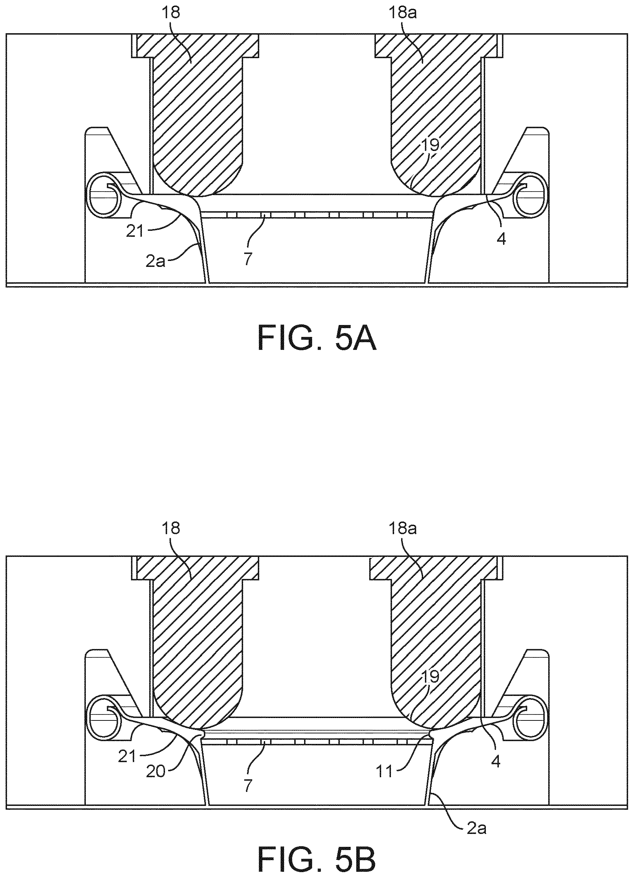

**Figure 5a and 5b** schematically show how the mechanical deformation of a capsule according to figure 2a may be performed.

Figure 5a presents a capsule 1 (in cross section) into which the carrier disk 7 has been inserted. A crimping tool (also called clamping tool) 18 comprising two crimping pins 18a each having a rounded end shape 19 is visible and in position ready to press, from the open side of the capsule, onto the capsule at the junction between the sidewall 2a and the flange 4 to induce a local deformation of the capsule body.

Figure 5b presents the same capsule after mechanical deformation of the junction between the sidewall 2a and the flange 4 by the crimping tool 18. As can be seen, the mechanical deformation on the capsule at this specific location has induced crimping points 11 and has generated a bead 20 (due to physical transfer of material) for each mechanical deformation.

As the beverage ingredient, filter element 9 and carrier disk 7 should remain in the capsule during the step of mechanical deformation of the capsule, this step is performed while the capsule has its open side located upward.

In this configuration, the bead 20 (that could also be named burr) that is formed is located above the carrier disk 7.

When considering the capsule of figure 2a and 2b, the bead 20 is located below the carrier disk 7 and therefore allows retaining it inside the capsule.

Depending on the number of crimping points 11 to be done on the capsule, the crimping tool 18 will comprise between 2 and 10 crimping pins 18a. Hence, the crimping tool will have angularly distributed crimping pins 18a.

In Figure 5a and 5b, sealing means 21 are present on the capsule. These sealing means provide a fluid sealing engagement with a sealing profile of a capsule engagement member of the beverage preparation machine as for example disclosed in EP 1 654 966 B1.

As clearly visible on the figures, the sealing means 21 are not damaged during the mechanical deformation of the capsule and the sealing function provide by the sealing means is maintained.

Sealing function of sealing means made by protrusions on and/or deformation of the flange of the capsule, as for example disclosed in EP 2 303 077 B1 or EP 2 387 922 B1, are preserved thanks to the specific location of the mechanical deformation.

For a better understanding of the full manufacturing process, the steps of this process ending to a capsule according to figure 2a are below presented.

First of all, a substantially rigid capsule body 2 having a circumferential sidewall 2a extending around an inner space to be at least partially filled with a beverage ingredient suitable for preparing the beverage is provided. Manufacturing of this capsule body may be made by deep-drawing of an aluminum foil but other technologies exist depending on the material of the capsule body.

As previously describe the capsule body 2 comprises sidewall 2a, base wall 3, flange 4 at the open side of the capsule opposite the base wall.

The inner space is then after filled with an amount of the beverage ingredient through the open side of the capsule. The amount of beverage ingredient is depending on the type of beverage, coffee, tea ... but also on the range of the beverage do be done (lungo,...).

Once the capsule is filled with the beverage ingredient, the filter element 9 is inserted through the open side of the capsule body in the inner space. Hence in the configuration of figure 5a (open side of the capsule being directed upward), the filter element is inserted inside the capsule on top of the beverage ingredient.

The carrier disk 7 is subsequently inserted through the open side of the capsule body over the filter element 9 in the inner space.

As already detailed, the carrier disk 7 comprising multiple outlet openings 8 through which in use the prepared beverage may flow out of the capsule

As an option, the filter element 9 and carrier disk 7 may be inserted in the inner space of the capsule at the same time. Both elements may be attached together or not when being inserted together.

The step of mechanically deforming (also defined as crimping) the capsule at the junction or in the vicinity of the junction of the flange and side wall is then performed in order to provide retention of the carrier disk inside the inner space the capsule as previously explained. The crimping may be done on several points at the same time: between 2 to 10 crimping points thanks to the specific crimping tool 18 above disclosed. Preferably, the crimping points are equally distributed, along the perimeter of the open side of the capsule, at the junction of the flange and side wall of the capsule.

The open side of the capsule is further closed by attaching the lid 5. Depending on the material of the lid, various technics may be used. In case of an aluminum lead (comprising a laker), heat sealing may be used.

According to the proposed capsule, the lid 5 comprises a pull tab 6.

The lid performing a tight closing of the capsules may be removed from the capsule prior to the use of the capsule in a beverage preparation device

The capsule is then be removed from the manufacturing line and is ready to be used.

It is to be noted that the sealing means 21 are not damaged during the crimping step and therefore their related sealing function fully kept.

In the above disclosure, the step of mechanically deforming the capsule is performed before the step of closing the open side of the capsule with a lid, however, it may be envisaged that the deformation step is made after closing the open side of the capsule with a lid.

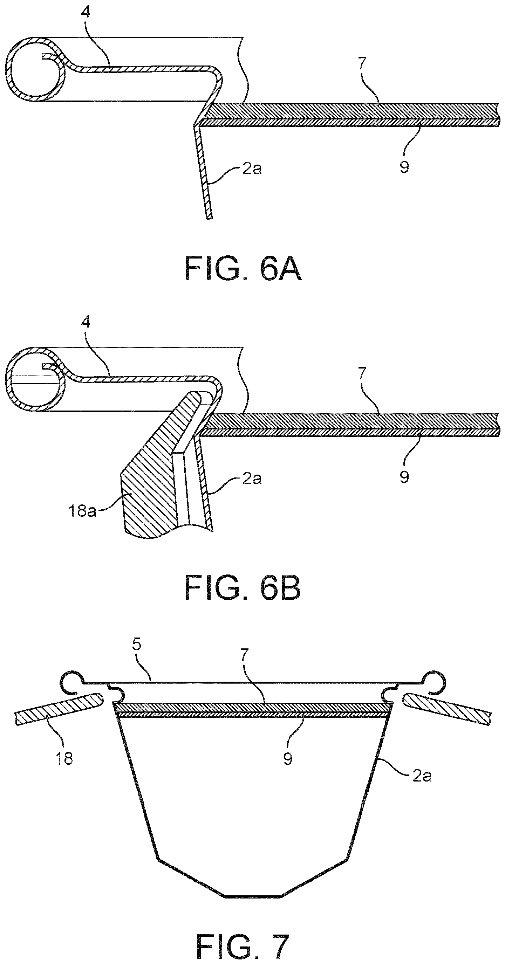

As represented in **Figure 6a and 6b** the at least one local mechanical deformation with the aim to maintain the carrier disk 7 inside de capsule body is made at the location of the edge of the flange, i.e. at the junction between the sidewall 2a and the flange 4, from the side of the capsule opposite the open side of the capsule. Here the mechanical deformation is applied directly on the side of the sidewall 2a of the capsule body 2.

Similarly, as in the description of Figure 5a and 5b, a crimping tool 18 comprising at least one crimping pin 18a is used to provide mechanical deformation at a specific location of the capsule in order to retain the carrier disk 7 inside the capsule.

This variant can be done before or after the lid 5 is positioned and/or sealed on the capsule. In case this variant is used the distance between the carrier disk 7 and the flange of the capsule body will be smaller (but enough to avoid interaction of the carrier disk with the pyramid place of the beverage device during extraction) than the one when the local deformation is made on the sidewall of the capsule body (Figure 6b).

**Figure 7** proposes a view of the mechanically deforming the capsule during the assembling processes in which the carrier disk 7 of the capsule is clamped inside the capsule body through local deformation of the capsule from the outside of the capsule.

In the assembling process of Figure 7, once the carrier disk 7 (or carrier disk 7 plus filter element 9) is inserted inside the capsule body 7, a crimping tool 18 presses the capsule body, from the outside in the vicinity of the junction of the flange and side wall of the capsule, just above the level of the carrier disk 7 when it is positioned inside the inner space of the capsule, to induce a local deformation 11 of the capsule body. Thanks to this local deformation, the carrier disk 7 is maintained in position inside the capsule.

The local deformation of the outside of the capsule body from the outside is made on its circumference, for example, at every 90°. This is enough to ensure efficient holding of the carrier disk 7.

As presented, the step of mechanically deforming the capsule locally at the junction of the flange and side wall is performed using a crimping method, however, other method for mechanically deforming the capsule at this specific location may be used such as stamping, metal drawing, embossing.

The presented embodiments for the carrier disk as well as for the manufacturing and assembling process may be combined whenever needed and possible to improve the holding of the carrier disk 7 (with or without the filter element 9) inside the capsule body 2.

The presented capsule may be associated with sealing means located on the flange of the capsule ensuring liquid tightness between the capsule and the injection part of the beverage production machine. For instance, the sealing means may be a silicon ring applied on the base of the flange and sidewall of the capsule body, or one or more protrusions, or bridges formed on the flange (and integral with the flange). Such sealing means (not represented) participates to the liquid-tight arrangement with the beverage production machine.

Although the invention has been described by way of example, it should be appreciated that variations and modifications may be made without departing from the scope of the invention as defined in the claims. Furthermore, where known equivalents exist to specific features, such equivalents are incorporated as if specifically referred in this specification.

## Claims

1. Capsule (1) for preparing a beverage comprising
- a substantially rigid capsule body (2) having a circumferential sidewall extending around an inner space of the capsule, said inner space being at least partially filled with a beverage ingredient suitable for preparing the beverage,
- a base wall (3) covering the inner space at a first end of the sidewall,
- a flange (4) arranged circumferentially around an open side of the capsule at a second end of the sidewall of the base body opposite the base wall,
- a lid (5) covering the inner space and the open side of the capsule at the second end of the sidewall opposite the base wall and tightly closing the capsule, the lid being removably attached to the flange of the capsule,
- a filter element (9) positioned in the inner space of the capsule between the beverage ingredient and the lid; and
- a carrier disk (7) provided in the inner space of the capsule between the lid and the filter, said carrier disk comprising multiple preformed outlet openings suitable for draining the prepared beverage from the inner space outside of the capsule when the capsule is used in a beverage preparation device,
**characterized in that** the capsule comprises at least one mechanical deformation (11a, 11b, 11c) at the junction or in the vicinity of the junction of the flange and side wall of the capsule, said mechanical deformation retaining the carrier disk inside the inner space of the capsule.

2. Capsule for preparing a beverage according to claim 1 wherein the at least one mechanical deformation (11a, 11b, 11c) at the junction of the flange and side wall of the capsule is located on the side of the open side of the capsule, opposite the base wall or on the side of the capsule opposite the open side of the capsule.

3. Capsule for preparing a beverage according to any of the preceding claims wherein the at least one mechanical deformation (11a, 11b, 11c) at the junction of the flange and side wall of the capsule is a deformation by crimping and the resulting mechanical deformations have preferably a rounded crimping imprints.

4. Capsule for preparing a beverage according to any of the preceding claims wherein the number of mechanical deformations (11a, 11b, 11c) is at least 2, preferably between 3 to 10 points.

5. Capsule for preparing a beverage according to any of the preceding claims wherein the mechanical deformations (11a, 11b, 11c) are angularly and/or equally distributed at the junction of the flange and side wall of the capsule.

6. Capsule for preparing a beverage according to any of the preceding claims wherein the capsule body, the lid, and the carrier disk are each mainly made from aluminum.

7. Capsule for preparing a beverage according to anyone of claims 1 to 6, wherein the lid (5) comprises a free pull tab (6) protruding from the lid.

8. Method of manufacturing a capsule suitable for preparing a beverage, particularly a capsule as claimed in claims 1 to 7, wherein the method comprises:
- providing a substantially rigid capsule body (2) having a circumferential sidewall (2a) extending around an inner space to be at least partially filled with a beverage ingredient suitable for preparing the beverage, a base wall (3) covering the inner space at a first end of the circumferential wall and a flange (4) arranged circumferentially around an open side of the capsule at a second end of the sidewall of the base body opposite the base wall,
- filling the inner space with an amount of the beverage ingredient through the open side of the capsule body opposite the base wall,
- inserting through the open side of the capsule body a filter (9) in the inner space after filling of the inner space with the beverage ingredient
- inserting through the open side of the capsule body a carrier disk (7) over the filter in the inner space, optionally the filter and carrier disk being inserted in the inner space of the capsule at the same time, the carrier disk comprising multiple outlet openings through which in use a prepared beverage may flow out of the capsule,
- closing the open side of the capsule by attaching a lid (5) comprising a pull tab (6) to the capsule flange extending over the open side, the lid closing tightly the capsule;
**characterized in that** the manufacturing method further comprises a step of mechanically deforming the capsule at the junction or in the vicinity of the junction of the flange and side wall of the capsule, said mechanical deformation (11a, 11b, 11c) retaining the carrier disk inside the inner
space the capsule.

9. Method of manufacturing a capsule according to claim 8 wherein the step of mechanically deforming the capsule at the junction of the flange and side wall is performed before or after the step of closing the open side of the capsule with a lid.

10. Method of manufacturing a capsule according to any of the preceding claims 8 to 9 wherein
the step of mechanically deforming the capsule at the junction of the flange and side wall is performed on the side of the open side of the capsule, opposite the base wall.

11. Method of manufacturing a capsule according to any of the claims 8 to 10wherein the step of mechanically deforming the capsule at the junction of the flange and side wall is performed on the side of the capsule opposite the open side of the capsule.

12. Method of manufacturing a capsule according to any of the preceding claims 8 to 11 wherein
the step of mechanically deforming the capsule at the junction of the flange and side wall is performed using a crimping method.

13. Method of manufacturing a capsule according to any of the preceding claims 8 to 12 wherein
the step of mechanically deforming the capsule at the junction of the flange and side wall is performed using at least one crimping pin and the crimping pin has preferably a rounded end shape.

14. Method of manufacturing a capsule according to any of the preceding claims 8 to 13 wherein
during the step of mechanically deforming the capsule at the junction of the flange and side wall of the capsule, the capsule is deformed in at least 2 points, preferably in 3 to 10 points.

15. Method of manufacturing a capsule according to claim 14 wherein the mechanical
deformations (11a, 11b, 11c) are angularly distributed, and preferably equally distributed, at the junction of the flange and side wall of the capsule.

16. Use of the capsule of anyone of claims 1 to 7.

## Patentansprüche

1. Kapsel (1) für die Zubereitung eines Getränks, umfassend
- einen im Wesentlichen starren Kapselkörper (2),der eine umlaufende Seitenwand aufweist, die sich um einen Innenraum der Kapsel erstreckt, wobei der Innenraum mindestens teilweise mit einer Getränkezutat gefüllt ist, die zum Zubereiten des Getränks geeignet ist,
- eine Basiswand (3), die den Innenraum an einem ersten Ende der Seitenwand abdeckt,
- einen Flansch (4), der umlaufend um eine offene Seite der Kapsel an einem zweiten Ende der Seitenwand des Basiskörpers gegenüber der Basiswand angeordnet ist,
- einen Deckel (5), der den Innenraum und die offene Seite der Kapsel an dem zweiten Ende der Seitenwand gegenüber der Basiswand abdeckt und die Kapsel dicht verschließt, wobei der Deckel abnehmbar an dem Flansch der Kapsel angebracht ist,
- ein Filterelement (9), das in dem Innenraum der Kapsel zwischen der Getränkezutat und dem Deckel positioniert ist; und
- eine Trägerscheibe (7), die in dem Innenraum der Kapsel zwischen dem Deckel und dem Filter bereitgestellt ist, die Trägerscheibe umfassend vielfache vorgeformte Auslassöffnungen, die zum Ablassen des zubereiteten Getränks aus dem Innenraum außerhalb der Kapsel geeignet sind, wenn die Kapsel in einer Getränkezubereitungsvorrichtung verwendet wird, **dadurch gekennzeichnet, dass** die Kapsel mindestens eine mechanische Verformung (11a, 11b, 11c) an der Verbindungsstelle oder in der Nähe der Verbindungsstelle des Flansches und der Seitenwand der Kapsel umfasst, wobei die mechanische Verformung die Trägerscheibe in dem Innenraum der Kapsel hält.

2. Kapsel für die Zubereitung eines Getränks nach Anspruch 1, wobei sich die mindestens eine mechanische Verformung (11a, 11b, 11c) an der Verbindungsstelle des Flansches und der Seitenwand der Kapsel auf der Seite der offenen Seite der Kapsel, gegenüber der Basiswand oder auf der Seite der Kapsel gegenüber der offenen Seite der Kapsel befindet.

3. Kapsel für die Zubereitung eines Getränks nach einem der vorstehenden Ansprüche, wobei
die mindestens eine mechanische Verformung (11a, 11b, 11c) an der Verbindungsstelle des Flansches und der Seitenwand der Kapsel eine Verformung durch Crimpen ist und die resultierenden mechanischen Verformungen vorzugsweise abgerundete Crimpungsabdrücke aufweisen.

4. Kapsel für die Zubereitung eines Getränks nach einem der vorstehenden Ansprüche, wobei die Anzahl von mechanischen Deformationen (11a, 11b, 11c) mindestens 2, vorzugsweise zwischen 3 und 10 Punkten beträgt.

5. Kapsel für die Zubereitung eines Getränks nach einem der vorstehenden Ansprüche, wobei die mechanischen Verformungen (11a, 11b, 11c) an der Verbindungsstelle des Flansches und der Seitenwand der Kapsel winklig und/oder gleichmäßig verteilt sind.

6. Kapsel für die Zubereitung eines Getränks nach einem der vorstehenden Ansprüche, wobei der Kapselkörper, der Deckel und die Trägerscheibe jeweils hauptsächlich aus Aluminium gefertigt sind.

7. Kapsel für die Zubereitung eines Getränks nach einem der Ansprüche 1 bis 6, wobei der Deckel (5) eine freie Aufreißlasche (6) aufweist, die von dem Deckel vorsteht.

8. Verfahren zum Herstellen einer Kapsel, die für die Zubereitung eines Getränks geeignet ist, insbesondere einer Kapsel nach den Ansprüchen 1 bis 7, wobei das Verfahren umfasst:
- Bereitstellen eines im Wesentlichen starren Kapselkörpers I (2), der eine umlaufenden Seitenwand (2a), die sich um einen Innenraum erstreckt, der mindestens teilweise mit einer Getränkezutat, die zum Zubereiten des Getränks geeignet ist, gefüllt werden soll, eine Basiswand (3), die den Innenraum an einem ersten Ende der umlaufenden Wand abdeckt, und einen Flansch (4), der umlaufend um eine offene Seite der Kapsel an einem zweiten Ende der Seitenwand des Basiskörpers gegenüber der Basiswand angeordnet ist, aufweist,
- Füllen des Innenraums mit einer Menge der Getränkezutat durch die offene Seite des Kapselkörpers gegenüber der Basiswand,
- Einsetzen, durch die offene Seite des Kapselkörpers, eines Filters (9) in den Innenraum nach dem Füllen des Innenraums mit der Getränkezutat
- Einsetzen, durch die offene Seite des Kapselkörpers, einer Trägerscheibe (7) über den Filter in den Innenraum, wobei optional der Filter und die Trägerscheibe gleichzeitig in den Innenraum der Kapsel eingesetzt werden, die Trägerscheibe umfassend vielfache Auslassöffnungen, durch die bei Gebrauch ein zubereitetes Getränk aus der Kapsel fließen kann,
- Verschließen der offenen Seite der Kapsel durch Anbringen eines Deckels (5), umfassend eine Aufreißlasche (6), an den Kapselflansch, der sich über die offene Seite erstreckt, wobei der Deckel die Kapsel dicht verschließt; **dadurch gekennzeichnet, dass** das Herstellungsverfahren ferner einen Schritt des mechanischen Verformens der Kapsel an der Verbindungsstelle oder in der Nähe der Verbindungsstelle des Flansches und der Seitenwand der Kapsel umfasst, wobei die mechanische Verformung (11a, 11b, 11c) die Trägerscheibe in dem Innenraum der Kapsel hält.

9. Verfahren zum Herstellen einer Kapsel nach Anspruch 8, wobei der Schritt des mechanischen Verformens der Kapsel an der Verbindungsstelle des Flansches und der Seitenwand vor oder nach dem Schritt des Verschließens der offenen Seite der Kapsel mit einem Deckel durchgeführt wird.

10. Verfahren zum Herstellen einer Kapsel nach einem der vorstehenden Ansprüche 8 bis 9, wobei
der Schritt des mechanischen Verformens der Kapsel an der Verbindungsstelle des Flansches und der Seitenwand auf der Seite der offenen Seite der Kapsel gegenüber der Basiswand durchgeführt wird.

11. Verfahren zum Herstellen einer Kapsel nach einem der Ansprüche 8 bis 10, wobei
der Schritt des mechanischen Verformens der Kapsel an der Verbindungsstelle des Flansches und der Seitenwand auf der Seite der Kapsel gegenüber der offenen Seite der Kapsel durchgeführt wird.

12. Verfahren zum Herstellen einer Kapsel nach einem der vorstehenden Ansprüche 8 bis 11, wobei
der Schritt des mechanischen Verformens der Kapsel an der Verbindungsstelle des Flansches und der Seitenwand unter Verwendung eines Crimpungsverfahrens durchgeführt wird.

13. Verfahren zum Herstellen einer Kapsel nach einem der vorstehenden Ansprüche 8 bis 12, wobei
der Schritt des mechanischen Verformens der Kapsel an der Verbindungsstelle des Flansches und der Seitenwand unter Verwendung von mindestens einem Crimpungsstift durchgeführt wird, und der Crimpungsstift vorzugsweise eine abgerundete Endform aufweist.

14. Verfahren zum Herstellen einer Kapsel nach einem der vorstehenden Ansprüche 8 bis 13, wobei
während des Schritts des mechanischen Verformens der Kapsel an der Verbindungsstelle des Flansches und der Seitenwand der Kapsel, die Kapsel an mindestens 2 Punkten, vorzugsweise an 3 bis 10 Punkten verformt wird.

15. Verfahren zum Herstellen einer Kapsel nach Anspruch 14, wobei die mechanischen Deformationen (11a, 11b, 11c) an der Verbindungsstelle des Flansches und der Seitenwand der Kapsel winkelförmig verteilt sind, und vorzugsweise gleichmäßig verteilt sind.

16. Verwendung der Kapsel nach einem der Ansprüche 1 bis 7.

## Revendications

1. Capsule (1) de préparation d'une boisson comprenant
- un corps de capsule sensiblement rigide (2) ayant une paroi latérale circonférentielle s'étendant autour d'un espace interne de la capsule, ledit espace interne étant au moins partiellement rempli d'un ingrédient de boisson approprié pour préparer la boisson,
- une paroi de base (3) recouvrant l'espace interne au niveau d'une première extrémité de la paroi latérale,
- une bride (4) disposée circonférentiellement autour d'un côté ouvert de la capsule au niveau d'une seconde extrémité de la paroi latérale du corps de base à l'opposé de la paroi de base,
- un couvercle (5) recouvrant l'espace interne et le côté ouvert de la capsule au niveau de la seconde extrémité de la paroi latérale à l'opposé de la paroi de base et fermant hermétiquement la capsule, le couvercle étant fixé de manière amovible à la bride de la capsule,
- un élément filtrant (9) positionné dans l'espace interne de la capsule entre l'ingrédient de boisson et le couvercle ; et
- un disque de support (7) prévu dans l'espace interne de la capsule entre le couvercle et le filtre, ledit disque de support comprenant de multiples ouvertures de sortie préformées appropriées pour évacuer la boisson préparée de l'espace interne vers l'extérieur de la capsule lorsque la capsule est utilisée dans un dispositif de préparation de boissons, **caractérisée en ce que** la capsule comprend au moins une déformation mécanique (11a, 11b, 11c) au niveau de la jonction ou à proximité de la jonction de la bride et de la paroi latérale de la capsule, ladite déformation mécanique retenant le disque de support à l'intérieur de l'espace interne de la capsule.

2. Capsule de préparation d'une boisson selon la revendication 1 dans laquelle l'au moins une déformation mécanique (11a, 11b, 11c) au niveau de la jonction de la bride et de la paroi latérale de la capsule est située sur le côté du côté ouvert de la capsule, à l'opposé de la paroi de base ou sur le côté de la capsule à l'opposé du côté ouvert de la capsule.

3. Capsule de préparation d'une boisson selon l'une quelconque des revendications précédentes dans laquelle
l'au moins une déformation mécanique (11a, 11b, 11c) au niveau de la jonction de la bride et de la paroi latérale de la capsule est une déformation par sertissage et les déformations mécaniques qui en résultent ont de préférence des empreintes de sertissage arrondies.

4. Capsule de préparation d'une boisson selon l'une quelconque des revendications précédentes dans laquelle le nombre de déformations mécaniques (11a, 11b, 11c) est d'au moins 2, de préférence entre 3 et 10 points.

5. Capsule de préparation d'une boisson selon l'une quelconque des revendications précédentes dans laquelle les déformations mécaniques (11a, 11b, 11c) sont réparties de manière angulaire et/ou de manière égale au niveau de la jonction de la bride et de la paroi latérale de la capsule.

6. Capsule de préparation d'une boisson selon l'une quelconque des revendications précédentes, dans laquelle le corps de capsule, le couvercle et le disque de support sont tous principalement constitués d'aluminium.

7. Capsule de préparation d'une boisson selon l'une quelconque des revendications 1 à 6, dans laquelle le couvercle (5) comprend une tirette libre (6) faisant saillie depuis le couvercle.

8. Procédé de fabrication d'une capsule appropriée pour préparer une boisson, en particulier une capsule selon les revendications 1 à 7, dans lequel le procédé comprend :
- la fourniture d'un corps de capsule sensiblement rigide (2) ayant une paroi latérale circonférentielle (2a) s'étendant autour d'un espace interne devant être au moins partiellement rempli d'un ingrédient de boisson approprié pour préparer la boisson, une paroi de base (3) recouvrant l'espace interne au niveau d'une première extrémité de la paroi circonférentielle et une bride (4) disposée circonférentiellement autour d'un côté ouvert de la capsule au niveau d'une seconde extrémité de la paroi latérale du corps de base à l'opposé de la paroi de base,
- le remplissage de l'espace interne avec une quantité de l'ingrédient de boisson par le côté ouvert du corps de capsule à l'opposé de la paroi de base,
- l'insertion par le côté ouvert du corps de capsule d'un filtre (9) dans l'espace interne après le remplissage de l'espace interne avec l'ingrédient de boisson
- l'insertion par le côté ouvert du corps de capsule d'un disque de support (7) sur le filtre dans l'espace interne, éventuellement le filtre et le disque de support étant insérés en même temps dans l'espace interne de la capsule, le disque de support comprenant de multiples ouvertures de sortie par lesquelles, lors de l'utilisation, une boisson préparée peut s'écouler hors de la capsule,
- la fermeture du côté ouvert de la capsule en fixant un couvercle (5) comprenant une tirette (6) à la bride de capsule s'étendant sur le côté ouvert, le couvercle fermant hermétiquement la capsule ; **caractérisé en ce que** le procédé de fabrication comprend en outre une étape consistant à déformer mécaniquement la capsule au niveau de la jonction ou à proximité de la jonction de la bride et de la paroi latérale de la capsule, ladite déformation mécanique (11a, 11b, 11c) retenant le disque de support à l'intérieur de l'espace interne de la capsule.

9. Procédé de fabrication d'une capsule selon la revendication 8, dans lequel l'étape consistant à déformer mécaniquement la capsule au niveau de la jonction de la bride et de la paroi latérale est réalisée avant ou après l'étape consistant à fermer le côté ouvert de la capsule avec un couvercle.

10. Procédé de fabrication d'une capsule selon l'une quelconque des revendications précédentes 8 à 9 dans lequel
l'étape consistant à déformer mécaniquement la capsule au niveau de la jonction de la bride et de la paroi latérale est réalisée sur le côté du côté ouvert de la capsule, à l'opposé de la paroi de base.

11. Procédé de fabrication d'une capsule selon l'une quelconque des revendications 8 à 10, dans lequel
l'étape consistant à déformer mécaniquement la capsule au niveau de la jonction de la bride et de la paroi latérale est réalisée sur le côté de la capsule à l'opposé du côté ouvert de la capsule.

12. Procédé de fabrication d'une capsule selon l'une quelconque des revendications précédentes 8 à 11 dans lequel
l'étape consistant à déformer mécaniquement la capsule au niveau de la jonction de la bride et de la paroi latérale est réalisée à l'aide d'un procédé de sertissage.

13. Procédé de fabrication d'une capsule selon l'une quelconque des revendications précédentes 8 à 12 dans lequel
l'étape consistant à déformer mécaniquement la capsule au niveau de la jonction de la bride et de la paroi latérale est réalisée à l'aide d'au moins une goupille de sertissage et la goupille de sertissage a de préférence une forme arrondie à l'extrémité.

14. Procédé de fabrication d'une capsule selon l'une quelconque des revendications précédentes 8 à 13 dans lequel
lors de l'étape consistant à déformer mécaniquement la capsule au niveau de la jonction de la bride et de la paroi latérale de la capsule, la capsule est déformée en au moins 2 points, de préférence en 3 à 10 points.

15. Procédé de fabrication d'une capsule selon la revendication 14 dans lequel les déformations mécaniques (11a, 11b, 11c) sont réparties de manière angulaire, et de préférence réparties de manière égale, au niveau de la jonction de la bride et de la paroi latérale de la capsule.

16. Utilisation de la capsule selon l'une quelconque des revendications 1 à 7.
